(19) Europäisches Patentamt

European Patent Office

Office européen des brevets

(11) **EP 1 380 324 B1**

(12) **EUROPEAN PATENT SPECIFICATION**

(45) Date of publication and mention
of the grant of the patent:
**28.09.2005 Bulletin 2005/39**

(51) Int Cl.⁷: **A63F 13/02**

(21) Application number: **02015711.1**

(22) Date of filing: **12.07.2002**

(54) **Game controller for mobile telecommunication terminals**

Spielkontroller für mobile Telekommunikationsterminale

Appareil de commande de jeu pour des terminaux de télécommunication

(84) Designated Contracting States:
**AT BE BG CH CY CZ DE DK EE ES FI FR GB GR
IE IT LI LU MC NL PT SE SK TR**

(43) Date of publication of application:
**14.01.2004 Bulletin 2004/03**

(73) Proprietor: **Sony Ericsson Mobile
Communications AB
221 88 Lund (SE)**

(72) Inventors:
• **Mollinari, Maurizio,
Sony Ericsson Mob.Com.Int. AB
85609 Ascheim-Dornach (DE)**
• **Berntsen, John,
Sony Ericsson Mobile Comm. Int. AB
85609 Ascheim-Dornach (DE)**
• **Takahashi, Tsutomu,
Sony Ericsson Mob.Com.Int. AB
85609 Ascheim-Dornach (DE)**

(74) Representative: **Körber, Martin Hans
Mitscherlich & Partner,
Patent- und Rechtsanwälte,
Sonnenstrasse 33
80331 München (DE)**

(56) References cited:
**GB-A- 2 320 397**          **US-A- 5 903 850**
**US-A1- 2001 021 668**

## Description

The present invention relates to a game controller for a mobile telecommunication terminal for use with a wireless telecommunication network.

Mobile telecommunication terminals, like for example mobile phones, personal digital assistants (PDA) or the like nowadays provide a user with quite a variety of different functions which go far beyond that of a simple mobile phone call. Manufacturers of mobile telecommunication terminals are driven to come up with all-in-one mobile devices, so that organisers, office applications, internet browsers and game platforms are no longer novelties on these devices. Even though the traditional mobile telecommunication terminal has thereby developed into a multifunctional device, it is still generally referred to as a mobile or mobile phone in everyday usage. For simplicity, a mobile telecommunication terminal will therefore also be referred to as a mobile phone in the ongoing of this specification, also it defines a device which provides further functionalities such as e.g. those indicated above.

As playing games on a mobile phone is currently very popular, a multitude of games are directly available or available for download on most mobile phones. A user can play a game by himself with the mobile phone usually in stand-by-mode or he can play together with several other players to which he is linked over a cellular telecommunication network.

A base common to all games for mobile phones is the challenge of a user's tactical skill and reactivity. By pressing certain keys on a mobile phones keypad, a user controls the behaviour of selected graphical entities visualised on the display of his mobile phone. The target of a game usually is to break one or more tasks and to score as many points as possible while doing so. Most users want to beat their previous scores or the ones of other players, which requires them to press the right keys on the mobile phone with perfect timing, leaving no margin for any delays. Even with a very good reactivity and finger agility, a user has to develop an enormous skill when the small and narrowly spaced keys on his mobile phone are his only control means. For not exceptionally skilled persons or person with thicker fingertips, the keypad layouts of their mobile phones form the main hurdle in their pursuit of a high score.

For a better key control, a slip-on mountable joystick distributed under the trademark label "Snake-BYTE" can be put over the keypad. The joystick movements are translated mechanically into keystrokes of the respective keys on the mobiles keypad. A player is such able to control the game by stirring or toggling the joystick instead of pressing the respective keys directly. The use of such a slip-on joystick is restricted to games using the same or the same relative arrangement of keys for control. Its mechanically based design makes it further difficult to be used on different mobile phone models as the mobile body and the key layout are usually different for different models even of the same manufacturer. Due to the nature of the joysticks mechanic, only four keys can be controlled by it, so that it is not applicable for games requiring more than four control keys. Further, car holders or interfaces are known, e.g. from US 5,903,850, in which a mobile terminal can be releasably held and which are able to exchange data with a mobile terminal. Some of these devices have user input means for inputting intructions to a mobile terminal.

The complexity of games offered increases continuously and rapidly with the cellular telecommunication networks improving their data transfer rates and the mobile phones being equipped with better hardware and higher and higher resolution colour displays. Multiuser online games are no longer dreams of the future, but the input capability for a game control is still very underdeveloped on mobile phones, and does not allow to use the mobile phone as a game console comparable to a computer based game console.

It is therefore an object of the present invention to provide a game controller for mobile telecommunication terminals which allows a user to control a game running on the respective mobile terminal in a simple and effective way.

This object is achieved by a game controller for in use releasably holding a mobile telecommunication terminal in order to control games installed on the mobile telecommunication terminal, said game controller comprising an input means for a user initiated data generation, a data transmission means for a transfer of data generated by the input means to and/or from a mobile telecommunication terminal held by the game controller, and a holding means to releasably hold a mobile telecommunication terminal, whereby data generated by a user making use of the input means are transferred via the data transmission means to a mobile telecommunication terminal held in the holding means for controlling one or more functions thereon.

The above object is further achieved by a game console formed by combining a respective telecommunication terminal with a game controller according to the present invention.

The present invention advantageously extends the scope of application for mobile telecommunication terminals to that of a professional game console by providing an accessory game controller with easy to operate control elements. A user playing games installed on his mobile phone is such no longer handicapped by the improper keypad design of his mobile telecommunication terminal but is enabled to play the games available on his mobile phone unrestrictedly and with full commitment.

A mechanical fastening can advantageously be combined with providing an electrical connection by the holding means to releasably hold a mobile telecommunication terminal comprising a plug-in connector.

The holding means for releasably holding a mobile telecommunication suitably comprises a receptacle formed in the game controller chassis for receiving the mobile telecommunication terminal enabling a user to connect both with ease.

A hinged cover mounted to the chassis of the game controller may form a part of the holding means for releasably holding the mobile telecommunication terminal to effectively combine styling with technical function.

For advantageously fastening mobile telecommunication terminals of different sizes on one and the same game controller, the holding means for releasably holding a mobile telecommunication terminal comprises an adjustable clamping mechanism.

To prevent an unintentional release of a mobile phone from the game controller, the holding means for releasably holding the mobile telecommunication preferably comprises a locking element for locking the holding means.

To easily put a mobile phone on the game controller, the holding means for releasably holding the mobile telecommunication suitably comprises a snap-on facility.

The input means may advantageously be implemented by key-like and/or rod-like and/or cog-like control elements. The input means may further advantageously comprise a touch sensitive element.

For a close to real-time game control, a control circuit monitors a status change of the input means in a preferred embodiment of the present invention, and processes the status change to a data code representing the change of the status or the actual status of the input means after the status change. A data code generated by the control circuit has preferably an AT-command format.

For a versatile use of the game controller, the data transmission means advantageously comprises a short range wireless radio link. A solid and reliable data transmission means for transferring data between the game controller and a mobile telecommunication terminal is suitably provided by a wired connection with a plug-in connector. The data transmission means may further comprise an optical data transmission line allowing a contactless transmission of data.

A game controller according to the present invention is preferably used in company with mobile phones providing a platform for executing games on it.

In the following description, the present invention is explained in more detail with respect to special embodiments and in relation to the enclosed drawings, in which

Fig. 1 shows in representation a) a top and in representation b) a side view of a game console formed by a mobile telecommunication terminal hooked-up with a game controller according to a first embodiment of the present invention,

Fig. 2 shows a game console with a game controller according to a second embodiment of the present invention in a partially broken-up representation,

Fig. 3 shows the clamping mechanism of a game controller according to Fig. 2 (a) in a top view, and (b) in a side view,

Fig. 4 shows the clamping mechanism of a game controller of Fig. 2 from the direction for inserting a mobile telecommunication terminal and in a view perpendicular to that,

Fig. 5 is a detailed view of a step-by-step driving mechanism to be used with a game controller according to a second embodiment of the present invention,

Fig. 6 shows a locking mechanism for a clamping system to be used with a game controller according to a second embodiment of the present invention,

Fig. 7 shows a holding mechanism according to a third embodiment of a game controller according to the present invention,

Fig. 8 shows a plug-in connection between a game controller according to the present invention and a mobile telecommunication terminal, and

Fig. 9 is a block-schematic diagram showing the processing of control commands generated on a game controller according to the present invention.

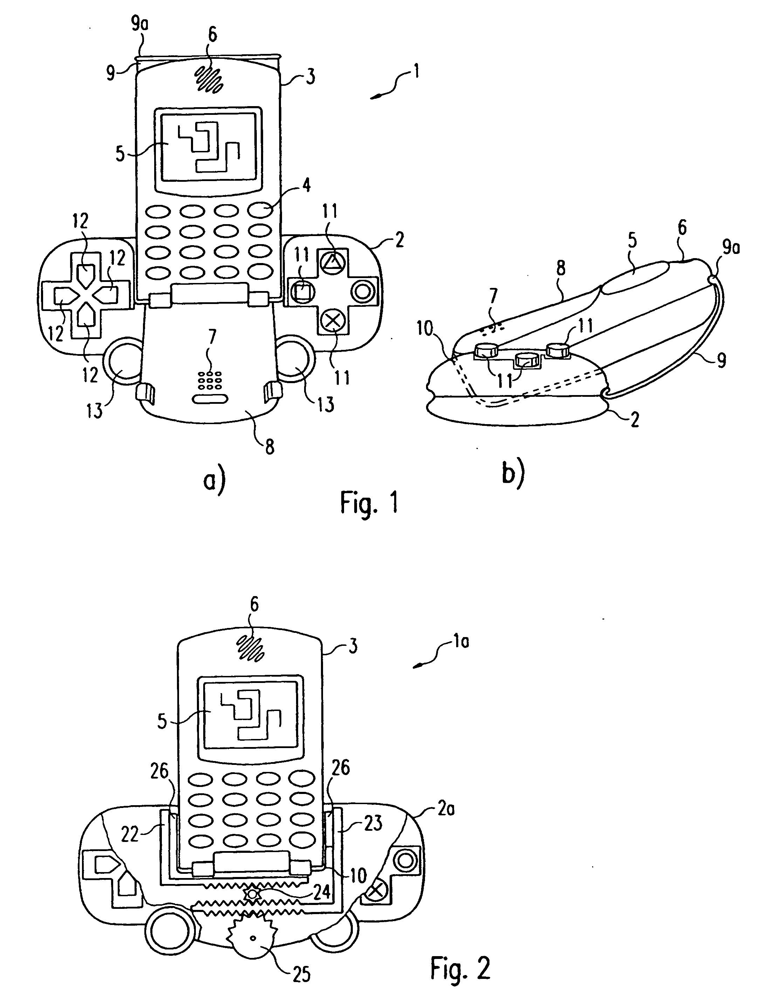

A game console 1 formed by a game controller 2 according to a first embodiment of the present invention and a mobile phone 3, or mobile telecommunication terminal 3, respectively, is shown in a top view in representation a) of Fig. 1 and in a side view in representation b) of Fig. 1. Although only a flap-type mobile phone 3 is shown in the representations of Fig. 1 with its flap 8 open in representation a) and with its flap 8 closed in representation b), other types of mobile phones can be used with the game controller 2 as well. The mobile phone 3 is accommodated in a receptacle 10 designed in form of a recess in the upper chassis shell of the game controller 2. The receptacle 10 is advantageously located between two ergonomically shaped panels holding control elements 11 and/or 13 to its right and control elements 12 and/or 13 to its left. As some games prompt a user to enter alphanumerical data like e.g. his name or the number of players participating in the game, the receptacle 10 is shaped to accommodate a mobile phone 3 without impeding an users access to any of its control elements or functions. The depth of the recess forming the receptacle 10 is adequate to encompass the lower end of a mobile phone 3 without obstructing a foldout of a flap 8 of a flap-type mobile phone 3 or an opening of a sliding cover used to cap the keypad 4 on some types of mobile phones. During a game, a flap 8 will most probably be used in a closed position as shown in representation b) of Fig. 1.

Sounds produced by a game are usually transduced by an earpiece 6 of a mobile phone 3 but can also be generated by a separate transducer incorporated within a game controller 2. Games requiring voice commands will employ a microphone 7 of the mobile phone 3. The graphic of a game is presented on the display 5 of the mobile telecommunication terminal 3.

Further special equipment like e.g. a vibrator for giving an illusion of directly controlling a jet or racing car, an accelerometer for an illusion of pushing against an apparatus like for instance a pinball machine shown on the display of the mobile phone or anything the like may be incorporated into the chassis of the game controller, as those special equipment is usually not provided on mobile telecommunication devices due to the downward trend of prices and the trend to continually smaller devices.

When a user is totally enthralled by a game or when a game allows him to use a tilt control for influencing a games' action e.g. by means of an accelerometer build-in the game controller, the user will certainly toss about the game console 1 while playing. Provisions have therefore to be made for preventing a mobile phone 3 from slipping out of the receptacle 10 of a game controller 2 while a user is playing.

In a first embodiment of the present invention illustrated in Fig. 1, a hinged cover 9 pivotally fixed on the chassis of the game controller 2 allows to cover the receptacle 10 when the game controller 2 is not in use. When being folded out, the hinged cover 9 is further adapted to encompass the upper end a mobile phone put with its lower end in the receptacle 10. The hinged cover 9 thus works like a thrust bearing for the upper end of the mobile phone 3 extending from the chassis of the game controller 2. While the lower end of the mobile 3 is already fixed in the receptacle 10 preventing it from moving sideways or downwards, the hinged cover 9 wedges in the upper face of the mobile phone 3 preventing it from slipping out of the receptacle 10. For an improved wedge-on, the flap 9 is equipped with a bulge 9a at its free end fitting in a corresponding recess on the upper face of the mobile phone 3 acting as a locking mechanism. Thus, a cosmetic design feature namely a protective cover is being beneficially utilised as a holding fixture.

Another way for locking the mobile phone 3 to the game controller is the use of a plug-in connection implemented with matable individual connectors formed on the mobile phone 3 and the game controller 2. The plug-in connection is preferably located within the receptacle 10. It may be used alone or in conjunction with one of the other holding mechanisms described. The plug-in connector may parallelly hereto be used for electrically connecting the game controller 2 with the mobile phone 3.

To enable a user to actuate the control elements 11, 12, and 13 bimanually, the receptacle 10 is favourably formed between two control panels, each equipped with a set of control elements 11, 12, and/or 13 as shown in Fig. 1. In a preferred design for a game controller 2 according to the present invention, a first set of keys 11 is used to activate certain functions implemented in a game while a second set of keys 12 located just on the other side of the receptacle 10 is used for a navigational purposes. Further keys 13 may be placed at the bottom edge of the game controller for allowing a thumb control. To ease operation, the control elements are advantageously carried out in different size, in different shape, different colours and with different symbols imprinted on it. Size and shape are preferably used to characterise different control elements belonging to a certain functional group. Within a functional group, different colours and/or different imprinted symbols support a user in selecting the right control element within the shortest time possible.

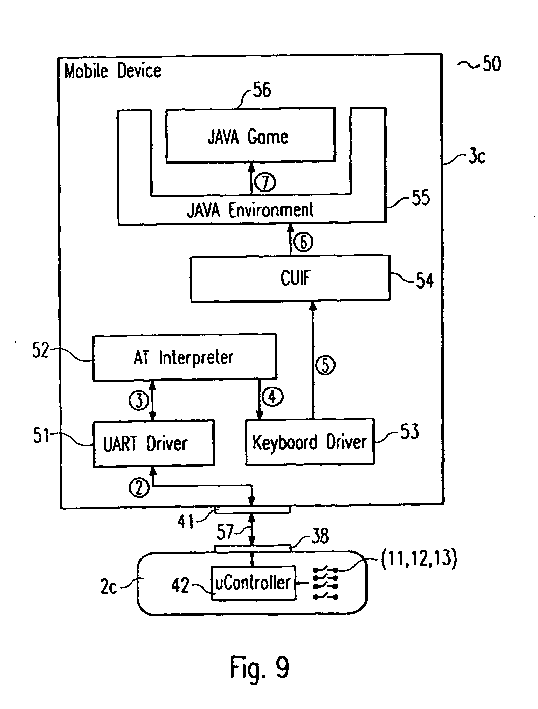

Having to press a button or key-like shaped control element will enable a user to react to events of a game in a very short time. Most of the control elements on the game controller will therefore be carried out in form of keys. But for some applications, especially those which challenge the navigational skill of a user like e.g. a racing game or flight simulator, a joy-stick-like control element will be preferred instead. Selections may preferably be made with cog-like shaped control elements. The control elements may be carried out as electromechanical, touch-sensitive, or electro-optical devices to transform an actuation into a control signal which can be processed by a control circuit of the game controller 2 or mobile phone 3. As will be described later in detail with reference to Fig. 9, the electrical signals generated by an actuation of a control element 11, 12 and 13 will be processed by a micro-controller 42 transforming it into a corresponding commanded statement preferably having an AT command format. A previously mentioned electrical plug-in connector 38 is therefore suitably built as part of a serial I/O port providing a communication from the game controller 2 to the mobile phone 3 and vice versa.

Instead of an electromechanical connector 38, wireless or wired infrared or other optical interfaces may be used for a data transmission between the mobile phone 3 and the game controller 2. Also a wireless short range radio data transmission facility like for instance a Bluetooth radio link may be used enabling a set-up of a game console 1 without any need for a mechanical connection between the mobile 3 and the game controller 2. More than one user with a separated game controllers will thus be able to participate in a game running on just one mobile phone 3.

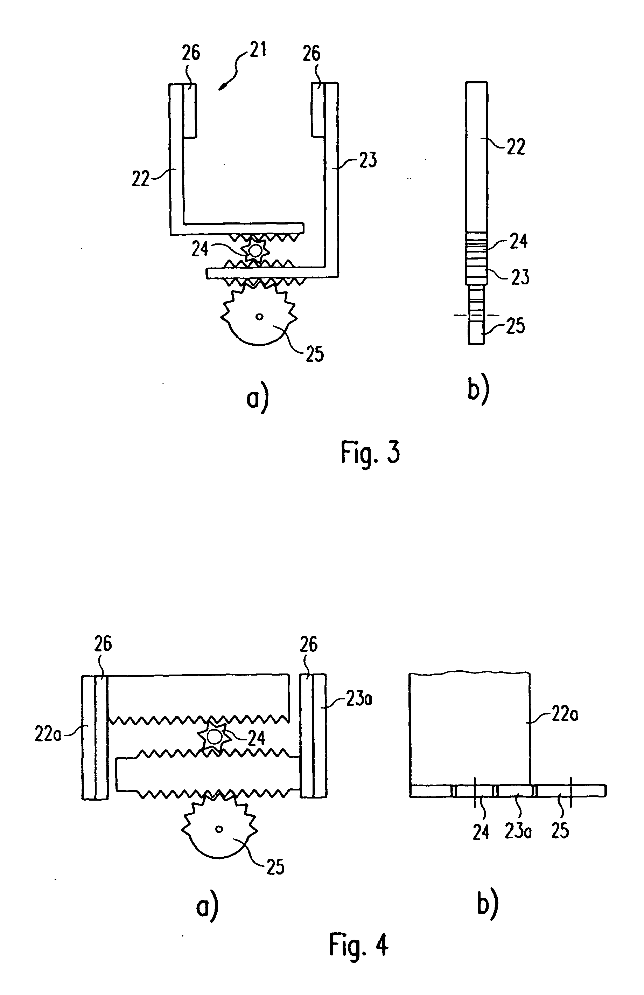

A game controller 2a with a fixture for fastening a mobile phone 3 different to the first embodiment is now described with reference to Figures 2, 3, and 4. The game controller 2a used to build-up game console 1a in combination with a mobile communication terminal 3 is equipped with a clamping mechanism 21 for securely holding the mobile phone 3 in a receptacle 10 formed in the chassis of the game controller 2a. The upper casing shell of the chassis is shown partly broken-up to clear the view to the clamping mechanism 21 located in the interior of the game controller chassis around the receptacle 10. A top view of the clamping mechanism 21 alone is shown in representation a) of Fig. 3 and a side view in representation b) of the same figure. The mechanism consists basically of two braces 22 and 23 which are shiftably connected to each other by means of a gear wheel 24 and driven by a driving wheel or pinion 25. Each brace is shaped like an L with one of the lever-like arms being used to keep a hold of the mobile phone 3 and the other being carried out to engage with the gear wheel 24 and/or pinion 25. These arms of the braces are to this end equipped with a dental ridge fitting in the dents formed along the circumference of the gear wheel 24. The second brace 23 further comprises a second dental ridge opposite the first one, which engages in the dents formed in the circumference of the driving wheel 25or a part thereof. By turning the driving wheel 25 around its axis, brace 23 is displaced to the right or to the left, respectively, thereby turning the gear wheel 24 in the direction opposite to rotation of the driving wheel 25 which causes the other brace 22 to move in a direction opposite to that of the directly engaged brace 23. Braces 22 and 23 can thus be opened or closed symmetrically to geometrical centre thereby providing an easy to handle clamping mechanism 21 for keeping a hold of differently sized mobile phones. In the concept for the clamping mechanism 21 shown in Fig. 3, the transmission mechanism formed by means of gear wheel 24 and driving wheel 25 is located in a plane parallel to the operation surface of the mobile phone 3 holding the keypad 4 and the display 5. An alternative concept presented in Fig. 4 follows the same principle, but with the transmission mechanism placed space-efficiently in a plane perpendicular to the mobile phones operation surface. Both types of fixtures are suited to fasten mobile phones of different sizes on the game controller 2a.

A cushion-like bulge 26 is formed on the lever-like arm of each brace which is pressed against a side face of a mobile phone 3. The cushion-like bulge 26 is made from a material which shows a high friction when in contact with the shell of the mobile phone 3. The material used is preferably softer than that used for the braces to allowing a slack in the transmission mechanics for applying a locking gadget described further down in this specification.

In Fig. 3 and 4, the driving wheel 25 is shown as a partly dented cog wheel with the dented part of the circumference used to displace brace 23 or 23a and the not dented part of the circumference suited allowing a user to turn it around its axis.

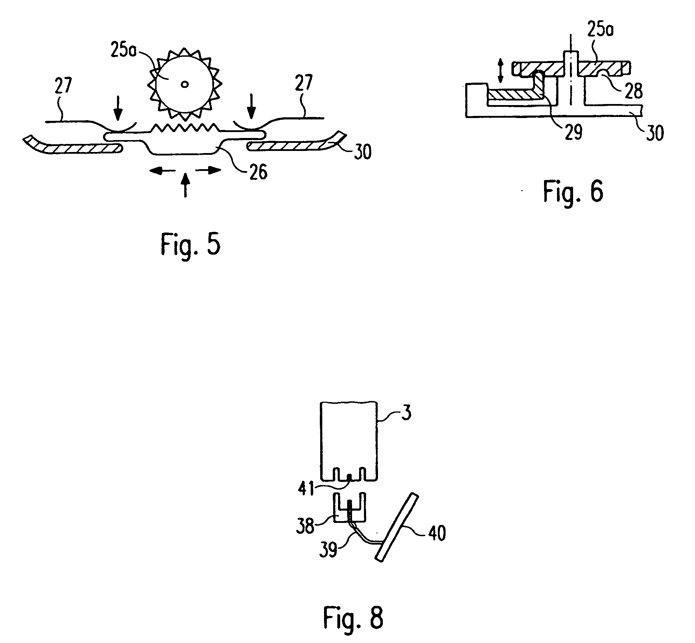

Usually, the rotation angle necessary for releasing or keeping hold of a mobile phone 3 is very small. A user might unintentionally touch the driving wheel 25 while playing and thus release the mobile phone 3 from the game controller 2a. An arrangement shown in Fig. 5 however prevents a user from unintentionally opening the clamping mechanism 21. The driving wheel 25a is carried out as pinion which is fully dented around its circumference. The pinion 25 does not penetrate the chassis of the game controller 2a so that it cannot be accessed by a user directly. A sliding element 26 with a dental ridge can be displaced tangentially to pinion 25a along a slideway formed at an opening in the chassis of game controller 2a. Spring elements 27 keep the slider 26 off pinion 25a, so that the teeth of both will not interleave. A user trying to open or close the clamping mechanism 21 will press the slider 26 against the force of the spring elements 27 until the dental ridge on the slider 26 engages in the dents of the pinion 25. By moving the pressed in slider 26 to the left or to the right, the pinion 25a is incrementally turned around its axis thereby releasing or closing the clamping mechanism 21, respectively.

An example for a locking gadget preventing the clamping mechanism 21 from unintentionally releasing a mobile phone 3 is shown in Fig. 6. The gadget comprises a latch 29 preferably made from material with elastic properties, and indentations 28 circularly arranged around the rotational axis of pinion 25a or driving wheel 25 on the bottom side of the same.

When the pinion25a or driving wheel 25 are turned around their respective axes, latch 29 will elastically give in to the movement for a certain extend, and hereby exert a return force on the pinion 25a or driving wheel 25. If the pinion 25a or driving wheel 25 are turned beyond a certain limit, the latch 29 located with one end in an indentation 28 is dislodged from it sliding across the bottom surface of the pinion 25a or driving wheel 25, respectively, to the adjacent indentation 28. For turning angles below the certain limit, the latch will remain with its end in the respective indentation 28, but due to the build-up tension will try to turn the pinion 25a or driving wheel 25 back in its original position. The described locking gadget will thus prevent the clamping mechanism 21 from opening itself thereby releasing the mobile phone from its hold. The latch 29 may also be formed as an integral part of the pinion 25a or driving wheel 25 such that it locks in indentations formed in the bottom of shell 30 of game controller 2a, and which are arranged circularly around the rotational axis of the pinion 25a or driving wheel 25 carrying the latch 29.

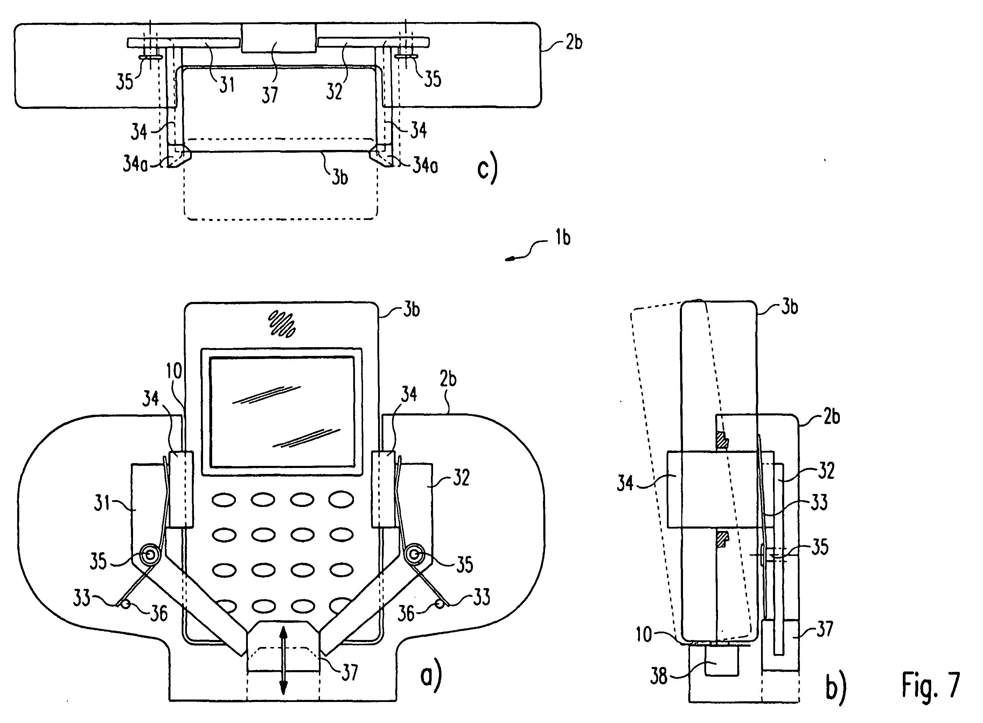

A further fixture for fastening a mobile phone onto a game controller is shown in Fig. 7 from three different viewing angles. Representation (a) of Fig. 7 shows the according game console 1b in a top view, representation (b) in a side view, and representation (c) in a view from above. The fastening fixture comprises two braces 31 and 32 which are rotationally supported on pins 35 located at the sides of the receptacle 10 of game controller 2b. Biased springs 33 push the braces 31 and 32 with their arms in the direction of the opening of the receptacle 10. The springs 33 are pretensed by supporting one end of the springs with pin-like abutments 36.

The extensions 34 of the lever-like arms of brace 31 and 32 each of which is aligned perpendicularly to its respective arm are pushed to the side faces of a mobile phone 3b by force of springs 33. The ends of each extensions carry a projecting hook-like bulge 34a for keeping a mobile phone 3b within the receptacle 10 when previously being put in there. The function of the holding mechanism with a such formed snap-on hook 34a is now explained with reference to the representations (b) and (c) of Fig. 7. At first, the mobile phone 3b is inserted obliquely in the receptacle 10 with its bottom end ahead as shown by the dashed lines in Fig. 7b and c. An electrical plug-in connector 38 may hereby already mate with the electrical connections provided at the bottom face of mobile phone 3b. Next, the mobile phone 3b is tilted into the receptacle 10, thereby pushing the snap-on hooks 34a apart until they close over the front surface of the mobile phone 3b having passed it. Now, the mobile phone 3b is kept securely in the mould of receptacle 10. The phone can only be removed from the receptacle 10 by pushing the snap-on hooks 34a apart against the force of the springs 33. To block the braces 31 and 32, a locking element 37 is provided which can be pushed from its release position indicated with dashed lines in representations (a) and (b) of Figure 7 to a locking position located just between the second two lever-like arms of the braces 31 and 32 behind the lower end of receptacle 10. This locking mechanism definitely prevents a mobile phone 3b from being released unintentionally from the receptacle 10 formed in the chassis of a game controller 2b according to the present invention.

An electrical plug-in connector 38 providing an electrical connection for a control circuit placed e.g. on a printed circuit board 40 located in the game controller 2b to a control logic of a mobile phone 3b is shown in Fig. 8. The shape of the bottom face of a mobile phone 3b and the arrangement of the pins 41 thereon is suited to mate with a respective plug-in connector 38. The contacts of the plug-in connector 38 are connected to the printed circuit board 40 by means of wires 39. Favourably, the plug-in connector 38 and its counter-part at the bottom face of mobile phone 3b are both carried out to lock with each other when mating, so that the mechanical connection itself already provides a fastening of the mobile phone 3b on the game controller 2b.

An additional fastening can be achieved by providing protrusions made from material with elastic properties at the edges or side walls of the receptacle 10 which either fix the mobile phone 3b by pressing against its side faces to obtain a good frictional hold or by engaging in complementary formed recessions thereon.

A block-schematic circuit diagram 50 showing the game extension of the control logic of a mobile phone 3c like e.g. one of the mobile phones described earlier, and a game controller 2c like for instance one of the embodiments describe above is shown in Fig. 9. A micro-controller 42 monitors the state of the control elements 11, 12 and 13 on the game controller 2c and sends a command statement representing the current state of the control elements and/or the current modification in the state of the control elements over a data transmission means 57 to the game extension of the mobile phone 3c. The data transmission means may be implemented in form of an electrical plug-in connection with a plug 38 mounted on the game controller 2c and a mating plug 41 mounted on the mobile phone 3c, a short range wireless radio link or a wired optical or wireless optical data transmission line or a combination thereof.

The commands which are sent from the micro-controller 42 to the mobile phone 3c in form of databursts are received by an UART (Universal Asynchronous Receiver and Transmitter) driver 51 which provides the functions necessary for an asynchronous transmission via the hereby implemented serial interface. The UART driver 51 makes each command available to the AT interpreter 52 which in his turn extracts form it the information concerning the actual state and/or state change of the control elements 11, 12, and 13, and passes this information further on to the keyboard driver 53. The keyboard driver 53 is responsible for translating the switch state or switch state change information into a scan code. For every change in the state of one of the control elements 11, 12, and 13, the keyboard driver 53 creates an associated key scan code and sends this to the CUIF (Cellular User Interface Framework) 54. The CUIF 54 remaps the scan code received by the key board driver 53 into a scan code required by a currently running game application and by user settings. If the running application is a JAVA environment 55 as shown in Fig. 9, the CUIF will remap the received scan codes into standard JAVA keyboard events. These events are understood and consumed by the running JAVA MIDlet 56.

The described control interface is based on an extension of the AT-command interface standard defined in the ITU-T recommendation V.25ter. The mobile phone 3c acts as a DCE (Data Circuit-terminating Equipment) and the game controller 2c as a DTE (Data Terminal Equipment).

A command prefix "-S" is used as an internal AT-command extension for the game interface of the mobile phone 3c. On a physical level, DTE and DCE are connected by a serial line using RS 232 circuitry. The format of the AT-command is given by

$$AT\text{-}SK\text{<}a\text{>}\text{<}b\text{>} \qquad (1)$$

wherein "AT" specifies the command to be an AT-command, "-S" is the command prefix to specify game control commands, and "<a>" and "<b>" are parameters representing the state of all control elements 11, 12, and 13 of the game controller 2c in the respective moment. Preferably, "<a>" and "<b>" have a binary ASCII character format.

Whenever a control element 11, 12, and 13 has changed its status, the micro-controller 42 will send an AT-command according to the format (1) indicated above to the mobile phone 3c containing the new status of all the control elements 11, 12 and 13 or a respective status change. In the first case, when only the actual state of the control elements is transmitted, the drivers on the mobile phone 3c will detect which control elements caused the respective status change.

It is to be noted, that a game cannot only be controlled through activating one of the control elements on the game controller but also a by pressing respective keys at the keypad 4 of a mobile phone. Both control actions are received by the keyboard driver 53 and passed to the CUIF 54. Some functions like e.g. entering the number of players taking part in a game are preferably entered by means of a keypad 4 on the mobile phone having a numerical and alphabetical key assignment. A game console combining a mobile phone with a game controller according to the present invention is therefore not restricted to transferring certain key assignments from the mobile phone to control elements 11 and/or 12 and/or 13 on the game controller, but also preserves the functionality of the keypad of the mobile phone for a comfortable input of alphanumerical data.

In addition to receiving command statements from the game controller 2c, the mobile phone may also be able to send data to the micro-controller 42 which are processed there to control special equipment like e.g. a built-in loudspeaker or a vibrator or something the like. The micro-controller 42 may further not only monitor the state of the control elements but also that of other control equipment like for instance an accelerometer.

The present invention advantageously extends the scope of application for mobile telecommunication terminals to that of a game console by providing an accessory game controller with an ergonomically shaped chassis and easy to operate control elements. The mobile terminal is thereby securely accommodated in a receptacle modelled in the chassis of the game controller. In combination with the game controller, the mobile phone is transformed into a professional game console providing a platform for playing games without restrictions. By combining a mobile phone with a game controller according to the present invention, a user is provided with control elements suited to allow him to play the games available on the mobile phone with full commitment, and a display for visually controlling the course of the game.

**Claims**

1. Game controller for in use releasably holding a mobile telecommunication terminal (3, 3a, 3b, 3c) in order to control games installed on the mobile telecommunication terminal (3, 3a, 3b, 3c), said game controller (2, 2a, 2b, 2c) comprising

   - an input means (11, 12, 13) for a user initiated data generation,
   - a data transmission means (38, 41, 57) for a transfer of data generated by the input means to and/or from a mobile telecommunication terminal (3, 3a, 3b, 3c) held by the game controller (2, 2a, 2b, 2c), and
   - a holding means (9, 21, 38) to releasably hold a mobile telecommunication terminal (3, 3a, 3b, 3c),

   whereby data generated by a user making use of the input means (11, 12, 13) are transferred via the data transmission means (38, 41, 57) to a mobile telecommunication terminal (3, 3a, 3b, 3c) held in the holding means for controlling one or more functions thereon.

2. Game controller according to claim 1,
   **characterised in**
   **that** the holding means (9, 21, 38) to releasably hold a mobile telecommunication terminal (3, 3a, 3b, 3c) comprises a plug-in connector (38).

3. Game controller according to claim 1 or 2,
   **characterised in**
   **that** the holding means (9, 21, 38) for releasably holding the mobile telecommunication terminal (3, 3a, 3b, 3c) comprises a receptacle (10) formed in the game controller (2, 2a, 2b, 2c) chassis for receiving the mobile telecommunication terminal (3, 3a, 3b, 3c).

4. Game controller according to claim 1, 2 or 3,
   **characterised in**
   **that** a hinged cover (9) mounted to the chassis of the game controller (2, 2a, 2b, 2c) forms a part of the holding means (9, 21, 38) for releasably holding the mobile telecommunication terminal (3, 3a, 3b, 3c).

5. Game controller according to one of the claims 1 to 4,
   **characterised in**
   **that** the holding means (9, 21, 38) for releasably holding the mobile telecommunication terminal (3, 3a, 3b, 3c) comprises an adjustable clamping mechanism (21) for fastening differently sized mobile telecommunication terminals (3, 3a, 3b, 3c).

6. Game controller according to one of the claims 1 to 5,

    **characterised in**

    **that** the holding means (9, 21, 38) for releasably holding the mobile telecommunication terminal (3, 3a, 3b, 3c) comprises a locking element (9a, 28, 29) for locking the holding means (9, 21, 38).

7. Game controller according to one of the claims 1 to 6,

    **characterised in**

    **that** the holding means (9, 21, 38) for releasably holding the mobile telecommunication terminal (3, 3a, 3b, 3c) comprises a snap-on facility (34, 34a).

8. Game controller according to one of the claims 1 to 7,

    **characterised in**

    **that** the input means (11, 12, 13) comprises a key-like and/or a rod-like and/or a cog-like control element.

9. Game controller according to one of the claims 1 to 8,

    **characterised in**

    **that** the input means (11, 12, 13) comprises a touch sensitive element.

10. Game controller according to one of the claims 1 to 9,

    **characterised in**

    **that** a control circuit (42) monitors a status change of the input means (11, 12, 13) and processes the status change to a data code representing the change of the status or the actual status of the input means (11, 12, 13) after the status change.

11. Game controller according to claim 10,

    **characterised in**

    **that** a data code generated by the control circuit (42) has an AT-command format.

12. Game controller according to claim 10 or 11,

    **characterised in**

    **that** the data transmission means (38, 41, 57) comprises a short range wireless radio link.

13. Game controller according to claim 10, 11 or 12,

    **characterised in**

    **that** the data transmission means (38, 41, 57) comprises a wired connection with a plug-in connector (38).

14. Game controller according to one of the claims 10 to 13,

    **characterised in**

    **that** the data transmission means (38, 41, 57) comprises an optical data transmission line.

15. Game console with a game controller (2, 2a, 2b, 2c) according to one of the claims 1 to 14 and a mobile telecommunication terminal (3, 3a, 3b, 3c) with a game controller interface for receiving data from and/or for transmitting data to said game controller (2, 2a, 2b, 2c).

**Patentansprüche**

1. Spielsteuerung - bei Verwendung - zum lösbaren Halten eines mobilen Telekommunikationsendgeräts (3, 3a, 3b, 3c), um Spiele, die auf dem mobilen Telekommunikationsendgerät (3, 3a, 3b, 3c) installiert sind, zu steuern, wobei die Spielsteuerung (2, 2a, 2b, 2c) aufweist:

    - eine Eingabeeinrichtung (11, 12, 13) für eine benutzer-initialisierte Datenerzeugung,
    - eine Datenübertragungseinrichtung (38, 41, 57) für eine Übertragung von Daten, welche durch die Eingabeeinrichtung erzeugt werden, zu und/oder von einem mobilen Telekommunikationsendgerät (3, 3a, 3b, 3c), welches durch die Spielsteuerung (2, 2a, 2b, 2c) gehalten wird, und
    - eine Halteeinrichtung (9, 21, 38), um ein mobiles Telekommunikationsendgerät (3, 3a, 3b, 3c) lösbar zu halten,

    wobei Daten, welche durch einen Benutzer erzeugt werden, der von der Eingabeeinrichtung (11, 12, 13) Gebrauch macht, über die Datenübertragungseinrichtung (38, 41, 57) zu einem mobilen Telekommunikationsendgerät (3, 3a, 3b, 3c) übertragen werden, welches in der Halteeinrichtung gehalten wird, um eine oder mehrere Funktionen darauf zu steuern.

2. Spielkontroller nach Anspruch 1,

    **dadurch gekennzeichnet, dass**

    die Halteeinrichtung (9, 21, 38), um ein mobiles Telekommunikationsendgerät (3, 3a, 3b, 3c) lösbar zu halten, einen Steckverbinder (38) aufweist.

3. Spielkontroller nach Anspruch 1 oder 2,

    **dadurch gekennzeichnet, dass**

    die Halteeinrichtung (9, 21, 38) zum lösbaren Halten des mobilen Telekommunikationsendgeräts (3, 3a, 3b, 3c) eine Aufnahme (10) aufweist, welche im Chassis des Spielkontrollers (2, 2a, 2b, 2c) gebildet ist, um das mobile Telekommunikationsendgerät (3, 3a, 3b, 3c) aufzunehmen.

4. Spielkontroller nach Anspruch 1, 2 oder 3,

    **dadurch gekennzeichnet, dass**

    eine Gelenkabdeckung (5), die am Chassis des Spielkontrollers (2, 2a, 2b, 2c) befestigt ist, ein Teil der Halteeinrichtung (9, 21, 38) bildet, um das mobile Telekommunikationsendgerät (3, 3a, 3b, 3c) lösbar zu halten.

5. Spielkontroller nach einem der Ansprüche 1 bis 4, **dadurch gekennzeichnet, dass**
die Halteeinrichtung (9, 21, 38) zum lösbaren Halten des mobilen Telekommunikationsendgeräts (3, 3a, 3b, 3c) einen einstellbaren Klemmmechanismus (21) aufweist, um unterschiedlich bemaßte Telekommunikationsendgeräte (3, 3a, 3b, 3c) zu befestigen.

6. Spielkontroller nach einem der Ansprüche 1 bis 5, **dadurch gekennzeichnet, dass**
die Halteeinrichtung (9, 21, 38) zum lösbaren Halten des mobilen Telekommunikationsendgeräts (3, 3a, 3b, 3c) ein Verriegelungselement (9a, 28, 29) aufweist, um die Halteeinrichtung (9, 21, 38) zu verriegeln.

7. Spielkontroller nach einem der Ansprüche 1 bis 6, **dadurch gekennzeichnet, dass**
die Halteeinrichtung (9, 21, 38) zum lösbaren Halten des mobilen Telekommunikationsendgeräts (3, 3a, 3b, 3c) eine Aufschnappeinrichtung (34, 34a) aufweist.

8. Spielkontroller nach einem der Ansprüche 1 bis 7, **dadurch gekennzeichnet, dass**
die Eingabeeinrichtung (11, 12, 13) ein tastenförmiges und/oder ein stabförmiges und/oder ein zahnförmiges Steuerelement aufweist.

9. Spielkontroller nach einem der Ansprüche 1 bis 8, **dadurch gekennzeichnet, dass**
die Eingabeeinrichtung (11, 12, 13) ein berührungsempfindliches Element aufweist.

10. Spielkontroller nach einem der Ansprüche 1 bis 9, **dadurch gekennzeichnet, dass**
eine Steuerschaltung (42) eine Statusänderung der Eingabeeinrichtung (11, 12, 13) überwacht und die Statusänderung in Bezug auf einen Datencode, der die Änderung des Status zeigt, oder des aktuellen Status der Eingabeeinrichtung (11, 12, 13) nach der Statusänderung verarbeitet.

11. Spielkontroller nach Anspruch 10, **dadurch gekennzeichnet, dass**
ein Datencode, der durch die Steuerschaltung (42) erzeugt wird, ein AT-Befehlsformat hat.

12. Spielkontroller nach Anspruch 10 oder 11, **dadurch gekennzeichnet, dass**
die Datenübertragungseinrichtung (38, 41, 57) eine Nahbereichs-Drahtlos-Funkverbindung aufweist.

13. Spielkontroller nach Anspruch 10, 11 oder 12, **dadurch gekennzeichnet, dass**
die Datenübertragungseinrichtung (38, 41, 57) eine drahtgebundene Verbindung mit einem Steckverbinder (38) aufweist.

14. Spielkontroller nach einem der Ansprüche 10 bis 13, **dadurch gekennzeichnet, dass**
die Datenübertragungseinrichtung (38, 41, 57) eine optische Datenübertragungsleitung aufweist.

15. Spielkonsole mit einem Spielkontroller (2, 2a, 2b, 2c) nach einem der Ansprüche 1 bis 14 und ein mobiles Telekommunikationsendgerät (3, 3a, 3b, 3c) mit einer Spielkontroller-Schnittstelle zum Empfangen von Daten von und/oder zum Übertragen von Daten zum Spielkontroller (2, 2a, 2b, 2c).

**Revendications**

1. Manette de jeu destinée à maintenir, avec possibilité de relâchement, en service, un terminal de télécommunication mobile (3, 3a, 3b, 3c), afin de commander des jeux installés sur le terminal de télécommunication mobile (3, 3a, 3b, 3c), ladite manette de jeu (2, 2a, 2b, 2c) comprenant :

 - un moyen d'entrée (11, 12, 13) destiné à la production de données à l'initiative de l'utilisateur,
 - un moyen de transmission de données (38, 41, 57) destiné à transférer des données produites par le moyen d'entrée à destination et/ou en provenance d'un terminal de télécommunication mobile (3, 3a, 3b, 3c) maintenu par la manette de jeu (2, 2a, 2b, 2c), et
 - un moyen de maintien (9, 21, 38) destiné à maintenir, avec possibilité de relâchement, un terminal de télécommunication mobile (3, 3a, 3b, 3c),

dans lequel des données produites par un utilisateur employant le moyen d'entrée (11, 12, 13) sont transférées via le moyen de transmission de données (38, 41, 57) vers un terminal de télécommunication mobile (3, 3a, 3b, 3c) maintenu dans le moyen de maintien, afin de commander une ou plusieurs fonctions de celui-ci.

2. Manette de jeu selon la revendication 1, **caractérisée en ce que** le moyen de maintien (9, 21, 38), destiné à maintenir, avec possibilité de relâchement, un terminal de télécommunication mobile (3, 3a, 3b, 3c), comprend un connecteur enfichable (38).

**3.** Manette de jeu selon la revendication 1 ou 2, **caractérisée en ce que** le moyen de maintien (9, 21, 38), destiné à maintenir, avec possibilité de relâchement, un terminal de télécommunication mobile (3, 3a, 3b, 3c), comprend un réceptacle (10) ménagé dans le châssis de la manette de jeu (2, 2a, 2b, 2c) afin de recevoir le terminal de télécommunication mobile (3, 3a, 3b, 3c).

**4.** Manette de jeu selon la revendication 1, 2 ou 3, **caractérisée en ce qu'**un couvercle articulé (9), monté sur le châssis de la manette de jeu (2, 2a, 2b, 2c), fait partie du moyen de maintien (9, 21, 38) destiné à maintenir, avec possibilité de relâchement, le terminal de télécommunication mobile (3, 3a, 3b, 3c).

**5.** Manette de jeu selon l'une des revendications 1 à 4, **caractérisée en ce que** le moyen de maintien (9, 21, 38), destiné à maintenir, avec possibilité de relâchement, le terminal de télécommunication mobile (3, 3a, 3b, 3c), comprend un mécanisme de serrage réglable (21) destiné à fixer des terminaux de télécommunication mobiles (3, 3a, 3b, 3c) de tailles différentes.

**6.** Manette de jeu selon l'une des revendications 1 à 5, **caractérisée en ce que** le moyen de maintien (9, 21, 38), destiné à maintenir, avec possibilité de relâchement, le terminal de télécommunication mobile (3, 3a, 3b, 3c), comprend un élément de verrouillage (9a, 28, 29) destiné à verrouiller le moyen de maintien (9, 21, 38).

**7.** Manette de jeu selon l'une des revendications 1 à 6, **caractérisée en ce que** le moyen de maintien (9, 21, 38), destiné à maintenir, avec possibilité de relâchement, le terminal de télécommunication mobile (3, 3a, 3b, 3c), comprend un dispositif d'encliquetage (34, 34a).

**8.** Manette de jeu selon l'une des revendications 1 à 7, **caractérisée en ce que** le moyen d'entrée (11, 12, 13) comprend un élément de commande similaire à une touche et/ou similaire à une tige et/ou similaire à un doigt.

**9.** Manette de jeu selon l'une des revendications 1 à 8, **caractérisée en ce que** le moyen d'entrée (11, 12, 13) comprend un élément tactile.

**10.** Manette de jeu selon l'une des revendications 1 à 9, **caractérisée en ce qu'**un circuit de commande (42) surveille un changement d'état du moyen d'entrée (11, 12, 13) et traite le changement d'état pour fournir un code de données représentant le changement d'état ou l'état réel du moyen d'entrée (11, 12, 13) après le changement d'état.

**11.** Manette de jeu selon la revendication 10, **caractérisée en ce qu'**un code de données produit par le circuit de commande (42) a le format d'une instruction de type AT.

**12.** Manette de jeu selon la revendication 10 ou 11, **caractérisée en ce que** le moyen de transmission de données (38, 41, 57) comprend une liaison radio sans fil à courte portée.

**13.** Manette de jeu selon la revendication 10, 11 ou 12, **caractérisée en ce que** le moyen de transmission de données (38, 41, 57) comprend une connexion câblée avec un connecteur enfichable (38).

**14.** Manette de jeu selon l'une des revendications 10 à 13, **caractérisée en ce que** le moyen de transmission de données (38, 41, 57) comprend une ligne optique de transmission de données.

**15.** Console de jeu avec une manette de jeu (2, 2a, 2b, 2c) selon l'une des revendications 1 à 14 et un terminal de télécommunication mobile (3, 3a, 3b, 3c) avec une interface de manette de jeu, destinée à recevoir des données en provenance et/ou à transmettre des données à destination de ladite manette de jeu (2, 2a, 2b, 2c).

Fig. 1

a)

b)

Fig. 2

Fig. 3

Fig. 4

Fig. 5

Fig. 6

Fig. 8

c)

a)

b)

Fig. 7

EP 1 380 324 B1

Fig. 9